# FASCICULE DE BREVET EUROPEEN

(11) **EP 1 007 835 B1**
(45) Date de publication et mention de la délivrance du brevet: **31.07.2002**
(21) Numéro de dépôt: 98925749.8
(22) Date de dépôt: 20.05.1998
(51) Int. Cl.: F02K 1/60

(54) **STRUCTURE D'EJECTION EQUIPEE D'UN INVERSEUR DE POUSSEE A DEUX PORTES ARRIERE ET A SECTION DE SORTIE PLANE**
SCHUBUMKEHRVORRICHTUNG MIT ZWEI KLAPPEN UND EBENER AUSTRITTSFLÄCHE
BACKBLAST GAS STRUCTURE EQUIPPED WITH THRUST REVERSER WITH TWO REAR DOORS AND PLANAR EXHAUST AREA

(30) Priorité: 03.06.1997 FR 9706780
(43) Date de publication de la demande: 14.06.2000
(73) Titulaire: HUREL-HISPANO MEUDON, 92360 Meudon-la-Forêt (FR)
(72) Inventeur: FOURNIER, Alain, F-92350 Le Plessis Robinson (FR); STANDISH, Robert, F-78125 Gazeran (FR)
(74) Mandataire: Sauvage, Renée
(86) Numéro de dépôt international: FR9801002
(87) Numéro de publication internationale: WO9855754

(56) Documents cités:
- EP-A- 0 774 578
- FR-A- 2 601 077
- FR-A- 2 697 292
- US-A- 4 147 027
- US-A- 5 390 879

## Description

La présente invention concerne une structure d'éjection des gaz pour moteurs à réaction et tout particulièrement pour les moteurs d'aéronefs du type à double flux, c'est à dire équipés d'une soufflante ou fan située en amont du moteur et assurant la circulation d'un courant d'air froid dans un canal annulaire formé entre un capotage extérieur et une tuyère axiale d'éjection du flux de gaz chauds de propulsion, les flux froid et chaud s'écoulant et se mélangeant ensuite dans un passage aval de section sensiblement circulaire.

De façon plus spécifique, l'invention concerne une structure d'éjection du type indiqué ci-dessus incorporant un système d'inverseur de poussée comportant deux portes présentant chacune un bord amont et un bord aval, par référence au sens d'écoulement des gaz, lesdites portes étant disposées à l'aval et étant chacune montée pivotante autour d'axes d'articulation entre une position escamotée (n'interférant pas avec l'éjection des gaz en jet direct) dans laquelle elles contribuent à définir, en association avec deux poutres latérales fixes symétriques par rapport à l'axe du moteur, ledit capotage extérieur, et une position déployée (provoquant l'inversion de poussée) dans laquelle lesdites portes libèrent, dans le capotage, un passage d'inversion des gaz tout en assurant l'obturation du canal, les deux poutres latérales, sur lesquelles sont articulées lesdites portes, faisant partie d'une structure fixe et comportant des extrémités aval indépendantes et écartées l'une de l'autre.

On connaît déjà, par le brevet français n° 2 382 594 déposé le 4 mars 1977, un ensemble d'inversion de ce type. Toutefois, s'il assure bien son rôle de déviation du flux de gaz et donc de freinage efficace en position de portes déployées, l'ensemble d'inversion décrit dans ce brevet antérieur présente un certain nombre d'inconvénients. En effet, dans ce brevet, d'une part, les axes d'articulation des portes sont situés à l'extrémité de poutres latérales étroites et, d'autre part, les bords aval des portes, qui, en position de portes escamotées, ou position de "jet direct", sont dans des plans inclinés par rapport à l'axe longitudinal du moteur, forment entre eux une section en V ou en "gueule de poisson" qui est préjudiciable au rendement du moteur en jet direct et ne correspond pas aux spécifications qui exigent une section de sortie des gaz qui soit aussi proche que possible d'un plan perpendiculaire à l'axe du moteur.

On connaît en outre de EP-A-0 774 578 un inverseur de poussée comprenant deux coquilles dans lesquelles sont ménagées des découpes permettant aux coquilles de débattre et de venir en vis-à-vis en mode d'inversion, de telle manière que les parties médianes des bords aval des coquilles forment, avec les poutres auxquelles les coquilles sont articulées, un bord de capotage en forme de cercle discontinu.

Le principal inconvénient de cette structure connue est que les découpes ménagées dans les coquilles créent, sur la section de sortie de l'inverseur, des discontinuités géométriques affectant négativement le rendement du moteur en jet direct.

La présente invention entend remédier à cet inconvénient et est caractérisée, dans ce but, par le fait que l'extrémité aval de chacune des poutres comporte, de part et d'autre de l'axe longitudinal de celles-ci, des excroissances latérales et en ce qu'en position de portes escamotées ou position de jet direct, la distance entre la partie médiane des bords aval desdites portes et le plan perpendiculaire à l'axe du moteur passant par les axes d'articulation des portes, est égale à la distance séparant ledit plan perpendiculaire et les extrémités aval des poutres latérales, de sorte que les parties médianes des extrémités aval des portes et les extrémités aval des poutres constituent un bord de capotage par lequel sortent les gaz, qui est à la fois sensiblement circulaire et sensiblement continu, cet ensemble étant contenu dans un plan parallèle au plan passant par les axes de pivotement des portes.

Afin d'obtenir une section de sortie des gaz en jet direct telle qu'indiqué ci-dessus, une forme de réalisation spécifique de l'invention prévoit que, en position de portes escamotées :
la trace, ou première trace, du plan contenant la partie médiane des bords aval de chaque porte sur un plan de référence constitué par le plan vertical contenant l'axe du moteur, et
les traces, ou deuxième et troisième traces, sur ce même plan de référence, des plans contenant respectivement les parties latérales du bord aval desdites portes
définissent ensemble un triangle isocèle dont la base est constituée par une partie de ladite première trace et dont le sommet est situé côté amont par rapport à ladite première trace,
les angles égaux dudit triangle isocèle étant inférieurs à 40°, et de préférence d'environ 30°.

La conséquence de cette disposition est que, en position de portes déployées (position d'inversion), les bords aval des portes, qui viennent obturer le canal, ménagent, entre leurs parties médianes en regard, une ouverture allongée par laquelle une faible partie du flux de gaz s'échappe selon l'axe du moteur.

Par ailleurs, l'extrémité aval de chacune des poutres comporte, de part et d'autre de l'axe longitudinal de celles-ci, des excroissances latérales symétriques, la distance séparant les extrémités des excroissances d'une même poutre étant supérieure à la distance séparant les deux axes d'articulation adjacents des portes sur ladite poutre.

On décrira maintenant, à titre d'exemple non limitatif, une forme de réalisation de l'invention en référence aux dessins annexés dans lesquels :
- la figure 1 est une vue schématique de côté de l'arrière-corps d'une nacelle de moteur d'avion comportant une structure d'éjection des gaz selon l'invention;
- la figure 2 est une vue de l'arrière selon la flèche II de la structure d'éjection des gaz de la figure 1 en position de portes déployées ou position d'inversion de poussée ;
- la figure 3 est une vue en perspective de la structure d'éjection des gaz, les portes étant représentées en position escamotée ou position de jet direct;
- la figure 4 est une vue de profil de la structure d'éjection des gaz dans la position de la figure 3, le plan vertical contenant l'axe du moteur se confondant avec la feuille du dessin ;
- les figures 5 et 6 sont respectivement une vue en perspective et une vue de profil de la structure d'éjection des gaz, les portes étant représentées en position déployée ou position d'inversion de poussée.

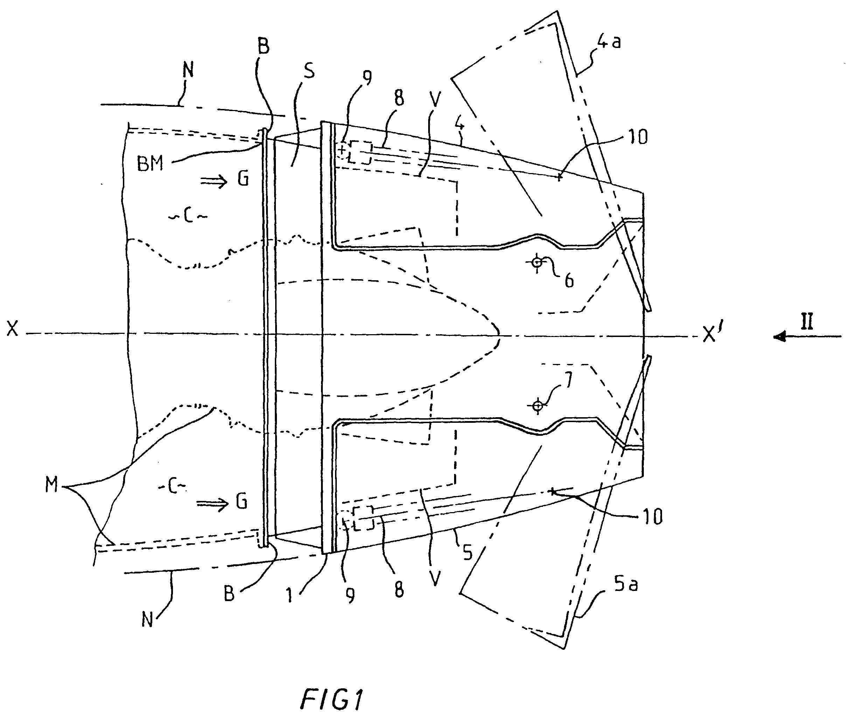

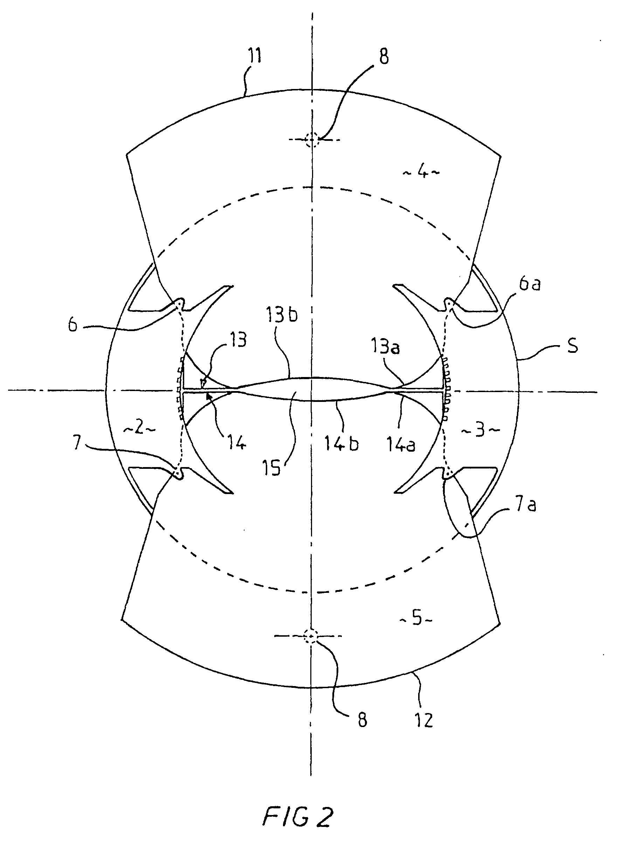

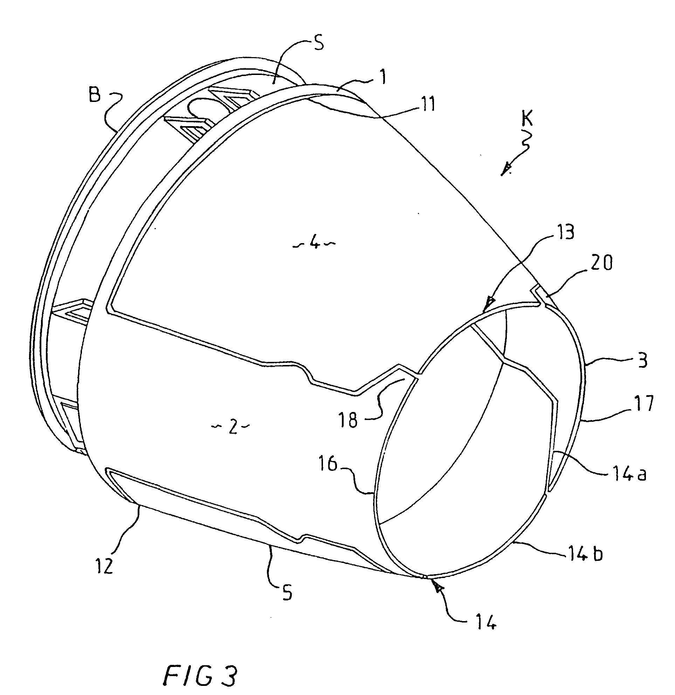

Dans l'exemple qui suit, on se référera à un moteur à réaction à double flux, c'est-à-dire à un moteur dans lequel le groupe propulseur génère un flux de gaz chauds, tandis qu'un fan, situé en amont du moteur, délivre un flux froid annulaire de même sens que le flux chaud. Dans la figure 1, on a représenté l'arrière-corps d'une nacelle classique N renfermant le moteur M. Dans les autres figures annexées, on n'a volontairement représenté que l'arrière-corps de la nacelle. On a indiqué, en X-X', l'axe central du moteur et par les flèches G le sens de circulation des gaz de l'amont vers l'aval à l'intérieur d'un canal C. L'arrière-corps comporte une structure fixe S qui se fixe sur la bride arrière BM du moteur et comprend une bride B, une virole V, un cadre 1 et deux poutres latérales 2 et 3 s'étendant depuis le cadre 1 vers l'aval parallèlement à l'axe X-X' et symétriquement par rapport à celui-ci. La virole V qui constitue la partie amont de la tuyère de sortie des gaz est entourée par un capotage désigné de façon générale en K (figure 3) et constituant l'enveloppe extérieure du canal C. Ce capotage K est constitué, en position de jet direct représenté en trait continu aux figures 1, 3 et 4, d'une part, par les deux poutres latérales 2 et 3 et, d'autre part, par deux portes 4 et 5 arrière ayant une forme en portion de cône. Les portes 4 et 5 sont montées de façon mobile autour d'axes respectivement 6,6a et 7,7a (figure 2) sur les poutres 2 et 3 de façon à pouvoir pivoter, sous l'action de vérins 8 attelés, d'une part, en 9 à la structure fixe S et, d'autre part, en 10 à l'intérieur de chacune des portes, entre une position escamotée représentée en trait continu à la figure 1 correspondant au fonctionnement en jet direct du moteur et une position déployée correspondant au fonctionnement en inversion de poussée du jet représentée en trait interrompu en 4a et 5a à la figure 1.

Chacune des portes présente un bord amont 11,12 et un bord aval désigné de façon générale en 13 et 14. Ces bords aval 13 et 14 ont une forme spécifique comme on le voit particulièrement sur les figures 2, 4 et 5. En effet, la partie médiane 13b,14b de ces bords est en retrait par rapport au plan contenant les parties latérales 13a,14a, de telle sorte que, en position de portes escamotées, les parties médianes 13b,14b se trouvent alignées dans le plan contenant les bords d'extrémité aval 16 et 17 des poutres latérales 2 et 3. Exprimé plus précisément, en position de portes escamotées, la trace tP2 du plan P2 contenant la partie médiane 13b,14b des bords aval 13,14 de chaque porte 4,5 sur le plan de la feuille de dessin et les traces tP3,tP3', sur ce même plan, des plans contenant respectivement les parties latérales 13a,14a du bord aval desdites portes définissent ensemble un triangle isocèle dont la base est constituée par une partie de ladite première trace tP2 et dont le sommet est situé côté amont par rapport à ladite première trace tP2. La valeur des angles égaux A du triangle isocèle dépend de l'inclinaison des bords latéraux 13a,14a par rapport au plan vertical qui contient les parties médianes 13b,14b ; dans l'exemple représenté, ces angles ont une valeur d'environ 30° et sont, en tout état de cause, inférieurs à 40°.

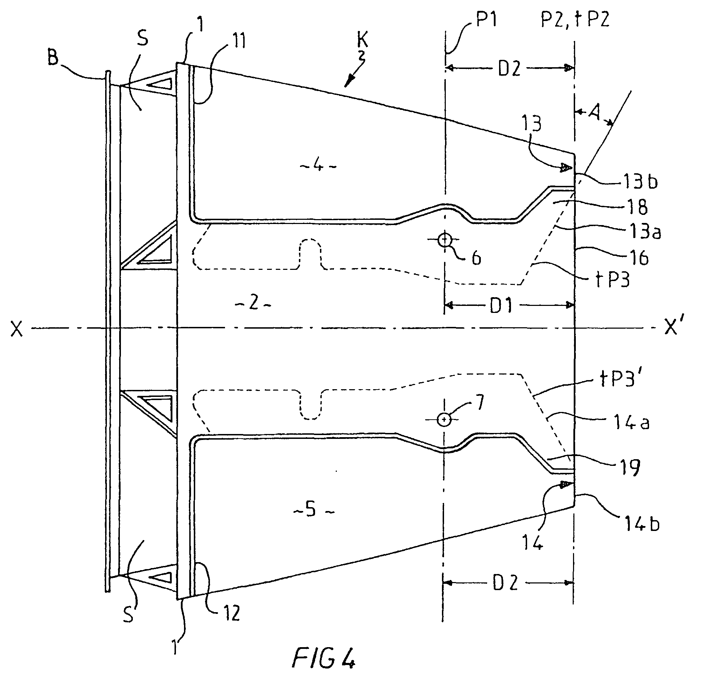

Comme on le voit parfaitement sur la figure 4, en position de portes escamotées, le plan P2 contenant les zones 13b,14b et les bords 16,17 est parallèle au plan P1 passant par les axes d'articulation 6,7,6a,7a des portes sur les poutres 2 et 3, la distance D1 entre les bords 16,17 et le plan P1 étant égale à la distance D2 séparant les zones en retrait 13b,14b dudit plan P1. On obtient ainsi, en position de jet direct, une section de sortie des gaz plane, sensiblement circulaire et sensiblement continue.

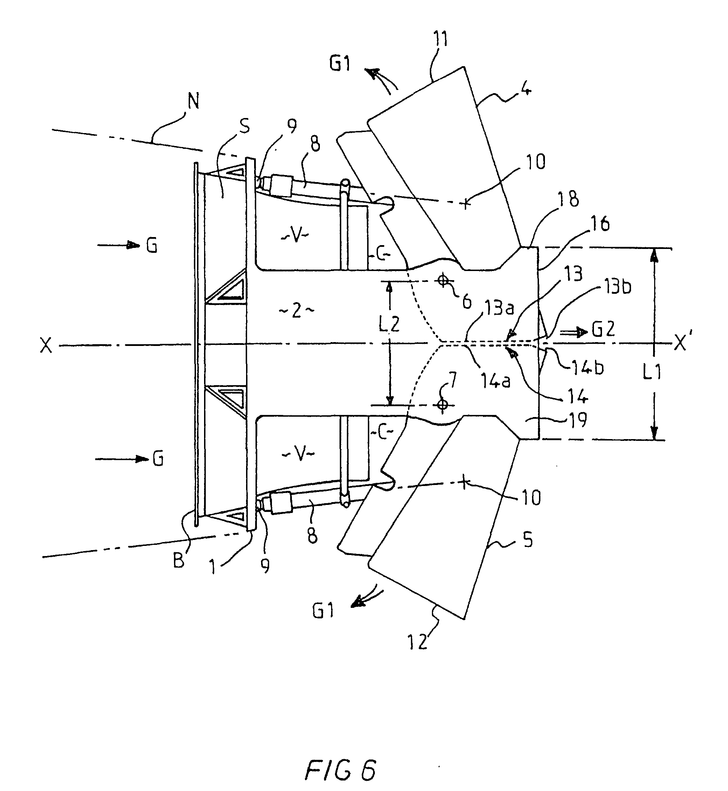

A leur extrémité aval, chacune des poutres 2,3 présente deux excroissances, respectivement 18,19 et 20,21, symétriques, et s'étendant latéralement à partir desdites poutres (voir figures 4, 5 et 6), ces excroissances permettant de réduire la longueur des zones en retrait 13b,14b des portes. Comme on le voit sur la figure 6, la distance L1 séparant les extrémités des excroissances 18,19 d'une même poutre 2 est supérieure à la distance L2 séparant les axes adjacents 6,7 de pivotement des portes.

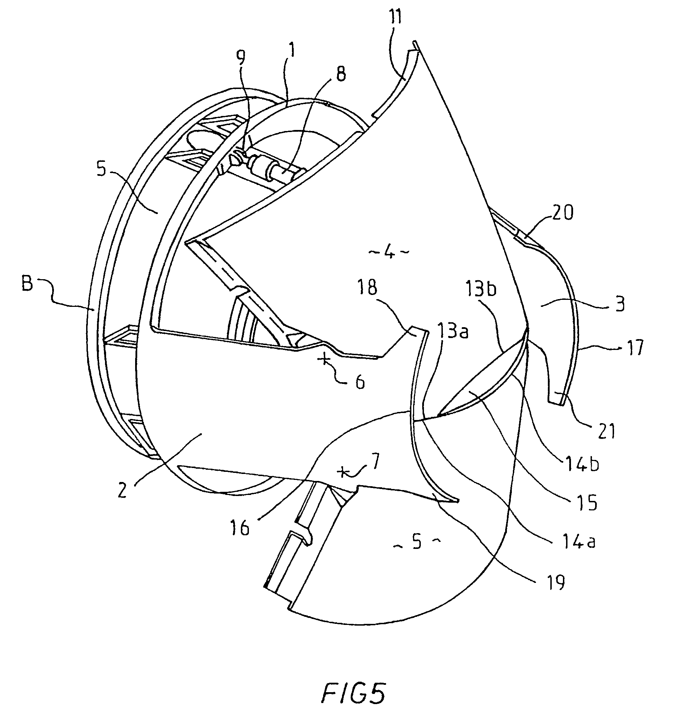

En position des portes déployées pour l'inversion de poussée telle que représentée aux figures 2, 5 et 6, les vérins 8 maintiennent lesdites portes de manière à amener les bords 13a,14a au voisinage l'un de l'autre sans cependant qu'ils s'appuient l'un sur l'autre. Les parties médianes 13b,14b forment entre elles une ouverture allongée 15 (figure 5). Dans cette situation, si la majorité du flux de gaz G est bien dévié latéralement et vers l'amont par les portes dans le sens des flèches G1 (figure 6), une petite fraction du flux continue à être éjectée en jet direct selon la flèche G2 par l'ouverture allongée 15. Toutefois, cette fuite G2, de l'ordre de moins de 10% du volume global de flux gazeux, ne réduit pas de façon significative l'effort de freinage généré par l'inverseur de poussée de l'invention. De toute façon, dans ce type d'inverseur agissant sur les deux flux du moteur, l'obtention d'une force de freinage suffisante ne pose pas de difficulté particulière et la légère réduction de l'efficacité de l'inverseur correspondant à la fuite G2 est tout à fait acceptable.

Il ressort de ce qui précède que, sans qu'aucune structure annulaire (virole) ne soit rapportée à l'arrière des portes, l'on dispose d'une section de sortie des gaz en jet direct plane et sensiblement circulaire qui élimine les effets néfastes sur la poussée du moteur en jet direct. Le dispositif selon l'invention a en outre l'avantage de réduire la longueur de l'arrière-corps de la nacelle tout en permettant l'installation de portes d'inverseur de longueur suffisante.

La longueur réduite de l'arrière-corps entraîne une réduction des traînées de frottement interne et externe et une réduction de la masse par rapport notamment aux inverseurs à virole arrière fixe.

## Revendications

1. Structure d'éjection des gaz pour moteur d'avion à réaction équipé d'un ensemble inverseur de poussée dans lequel la structure du moteur est entourée par un capotage extérieur (K) qui délimite un canal (C) d'éjection des gaz de propulsion, l'ensemble inverseur de poussée comportant deux portes (4,5) présentant chacune un bord amont (11,12) et un bord aval (13,14), par référence au sens d'écoulement des gaz, lesdites portes (4,5) étant disposées à l'aval et étant chacune montée pivotante, autour d'axes d'articulation (6,6a;7,7a), entre :
une position escamotée dans laquelle elles contribuent à définir, en association avec deux poutres latérales fixes (2,3) symétriques par rapport à l'axe (X,X') du moteur, ledit capotage extérieur (K), les deux poutres latérales (2,3), sur lesquelles sont articulées lesdites portes, faisant partie d'une structure fixe (S) et comportant des extrémités aval (16,17) indépendantes et écartées l'une de l'autre, la distance (D2) entre les parties médianes (13b,14b) des bords aval (13,14) desdites portes et le plan (P1) perpendiculaire à l'axe (X,X') du moteur et passant par lesdits axes d'articulation (6,6a;7,7a) étant égale à la distance (D1) séparant ledit plan perpendiculaire (P1) et lesdites extrémités aval (16,17) des poutres latérales, et
une position déployée dans laquelle lesdites portes libèrent, dans le capotage (K), un passage d'inversion des gaz tout en assurant l'obturation du canal (C),
**caractérisée en ce que** l'extrémité aval (16,17) de chacune des poutres (2,3) comporte, de part et d'autre de l'axe longitudinal de celles-ci, des excroissances latérales (18,19;20,21), telles que les parties médianes (13b,14b) des extrémités aval (13,14) des portes (4,5) et celles (16,17) des poutres (2,3) constituent un bord de capotage à la fois sensiblement circulaire et sensiblement continu.

2. Structure d'éjection des gaz selon la revendication 1, **caractérisée en ce que**, en position de portes escamotées :
la trace, ou première trace (tP2), du plan contenant la partie médiane (13b,14b) des bords aval (13,14) de chaque porte (4,5) sur un plan de référence constitué par le plan vertical contenant l'axe (X,X') du moteur, et
les traces, ou deuxième et troisième traces (tP3,tP3'), sur ce même plan de référence, des plans contenant respectivement les parties latérales (13a,14a) du bord aval desdites portes
définissent ensemble un triangle isocèle dont la base est constituée par une partie de ladite première trace (tP2) et dont le sommet est situé côté amont par rapport à ladite première trace (tP2), les angles égaux (A) dudit triangle isocèle étant inférieurs à 40°, et de préférence d'environ 30°.

3. Structure d'éjection des gaz selon l'une quelconque des revendications précédentes, **caractérisée en ce que**, sur une même poutre (2,3), la distance (L1) séparant les extrémités desdites excroissances (18,19;20,21) est supérieure à la distance (L2) séparant les deux axes adjacents (6,7) d'articulation des portes (4,5).

## Patentansprüche

1. Gasausstoßstruktur für ein Flugzeug-Strahltriebwerk mit einer Schubumkehreinheit, bei der die Struktur des Triebwerks von einer Außenverkleidung (K) umgeben ist, die einen Kanal (C) für den Ausstoß der Treibgase abgrenzt, wobei die Schubumkehreinheit zwei Türen (4,5) besitzt, die jeweils einen, bezogen auf die Strömungsrichtung der Gase, stromauf gelegenen Rand (11,12) und einen stromab gelegenen Rand (13,14) aufweisen, wobei diese Türen (4,5) stromabwärts angeordnet sind und jeweils um Gelenkachsen (6,6a;7,7a) verschwenkbar montiert sind zwischen
einer eingeklappten Stellung, in der sie dazu beitragen, zusammen mit zwei feststehenden, bezüglich der Achse (X,X') des Triebwerks symmetrischen seitlichen Trägern (2,3) die Außenverkleidung (K) zu bilden, wobei die beiden seitlichen Träger (2,3) an denen die Türen angelenkt sind, Teil einer festen Struktur (S) bilden und unabhängige und voneinander entfernte stromab gelegene Enden (16,17) besitzen, wobei der Abstand (D2) zwischen den mittleren Teilen (13b,14b) der stromab gelegenen Ränder (13,14) der Türen und der Ebene (P1), die zur Achse (X,X') des Triebwerks senkrecht ist und durch die Gelenkachsen (6,6a;7,7a) gelegt ist, gleich dem Abstand (D1) dieser senkrechten Ebene (P1) von den stromab gelegenen Enden (16,17) der seitlichen Träger ist, und
einer ausgeklappten Stellung, in der die Türen in der Verkleidung (K) einen Durchgang zur Umkehr der Gase freilegen, indem sie gleichzeitig die Verschließung des Kanals (C) gewährleisten,
**dadurch gekennzeichnet, dass** das stromab gelegene Ende (16,17) jedes der Träger (2,3) zu beiden Seiten ihrer Längsachse solche seitliche Auswüchse (18,19;20,21) aufweist, dass die mittleren Teile (13b,14b) der stromab gelegenen Enden (13,14) der Türen (4,5) und diejenigen (16,17) der Träger (2,3) einen im wesentlichen kreisförmigen und gleichzeitig im wesentlichen durchgehenden Verkleidungsrand bilden.

2. Gasausstoßstruktur nach Anspruch 1, **dadurch gekennzeichnet, dass** in der Stellung der eingeklappten Türen
die Spurlinie der Ebene, in der der mittlere Teil (13b,14b) der stromab gelegenen Ränder (13,14) jeder Tür (4,5) liegt, auf einer Bezugsebene, die von der vertikalen, die Achse (X,X') des Triebwerks enthaltenden Ebene gebildet wird, oder erste Spurlinie (tP2), und
die Spurlinien der Ebenen, in denen jeweils die seitlichen Teile (13a,14a) des stromab gelegenen Rands dieser Türen liegen, auf derselben Bezugsebene, oder zweite Spurlinie (tP3) und dritte Spurlinie (tP3'),
zusammen ein gleichschenkliges Dreieck bilden, dessen Basis von einem Teil der ersten Spurlinie (tP2) gebildet wird und dessen Spitze bezüglich der ersten Spurlinie (tP2) stromauf gelegen ist, wobei die gleichen Winkel (A) dieses gleichschenkligen Dreiecks kleiner als 40° sind und vorzugsweise etwa 30° betragen.

3. Gasausstoßstruktur nach einem der vorhergehenden Ansprüche, **dadurch gekennzeichnet, dass** auf einem gemeinsamen Träger (2,3) der Abstand (L1) zwischen den Enden der Auswüchse (18,19;20,21) größer als der Abstand (L2) zwischen den beiden benachbarten Gelenkachsen (6,7) der Türen (4,5) ist.

## Claims

1. Gas-ejection structure for a jet aircraft engine equipped with a thrust-reverser assembly in which the structure of the engine is surrounded by an external cowling (K) which delimits a channel (C) for ejecting the propulsion gases, the thrust-reverser assembly including two doors (4, 5) each having an upstream edge (11, 12) and a downstream edge (13, 14), by reference to the direction of flow of the gases, the said doors (4, 5) being arranged downstream and each being mounted pivoting about axes of articulation (6, 6a; 7, 7a) between :
a retracted position in which, in association with two fixed lateral beams (2, 3) which are symmetric with respect to the axis (X, X') of the engine, they contribute to defining the said outer cowling (K), the two lateral beams (2, 3), onto which the said doors are articulated, forming part of a fixed structure (S) and including downstream ends (16, 17) which are independent and spaced apart from one another, the distance (D2) between the mid-parts (13b, 14b) of the downstream edges (13, 14) of the said doors and the plane (P1) perpendicular to the axis (X, X') of the engine and passing through the said axes of articulation (6, 6a ; 7, 7a) is equal to the distance (D1) separating the said perpendicular plane (P1) and the said downstream ends (16, 17) of the lateral beams, and
a deployed position in which the said doors clear a passage in the cowling (K) for reversal of the gases while blocking off the channel (C),
**characterized in that** the downstream end (16, 17) of each of the beams (2, 3) includes, on either side of the longitudinal axis thereof, lateral protrusions (18, 19; 20, 21) such that the mid-parts (13b, 14b) of the downstream ends (13, 14) of the doors and those (16, 17) of the beams (2, 3) constitute a cowling edge which is at the same time substantially circular and substantially continuous.

2. Gas-ejection structure according to Claim 1, **characterized in that**, in doors-stowed position:
the outline, or first outline (tP2), of the plane containing the mid-part (13b, 14b) of the downstream edges (13, 14) of each door (4, 5) on a reference plane consisting of the vertical plane containing the axis (X, X') of the engine, and
the outlines, or second and third outlines (tP3, tP3'), on this same reference plane, of the planes containing the lateral parts (13a, 14a) of the downstream edge of the said doors, respectively, together define an isosceles triangle the base of which consists of a part of the said first outline (tP2) and the vertex of which is situated on the upstream side with respect to the said first outline (tP2), the equal angles (A) of the said isosceles triangle being less than 40°, and preferably about 30°.

3. Gas-ejection structure according to either of the preceding claims, **characterized in that**, on the same beam (2, 3), the distance (L1) separating the ends of the said protrusions (18, 19; 20, 21) is greater than the distance (L2) separating the two adjacent axes (6, 7) of articulation of the doors (4, 5).
